Europäisches Patentamt

European Patent Office

Office européen des brevets

(11) Veröffentlichungsnummer: **0 251 319**

**A2**

(12) **EUROPÄISCHE PATENTANMELDUNG**

(21) Anmeldenummer: 87109531.1

(22) Anmeldetag: 02.07.87

(51) Int. Cl.³: **B 60 Q 11/00**

(30) Priorität: 04.07.86 DE 3622567

(43) Veröffentlichungstag der Anmeldung:
07.01.88 Patentblatt 88/1

(84) Benannte Vertragsstaaten:
AT BE CH ES FR GB IT LI NL SE

(71) Anmelder: MFK-Maschinenfabrik Kraeft GmbH
Goebelstrasse 49
D-2804 Lilienthal(DE)

(72) Erfinder: Kraeft, Lothar
Landwehrstrasse 18
D-2804 Lilienthal(DE)

(74) Vertreter: Hoormann, Walter, Dr.-Ing. et al,
FORRESTER & BOEHMERT Widenmayerstrasse 4/I
D-8000 München 22(DE)

(54) Einrichtung zur Blinker-Funktionskontrolle für ein Kraftfahrzeug mit Anhänger.

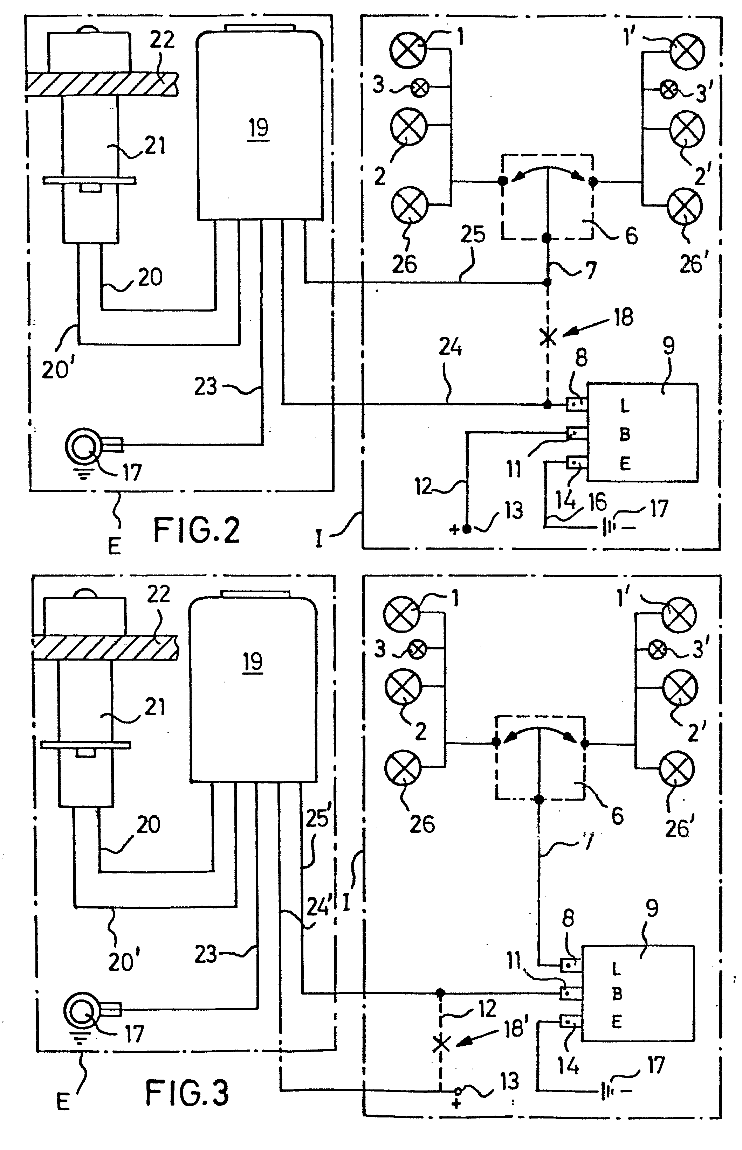

(57) Die Erfindung betrifft eine Einrichtung zur optischen Funktionskontrolle der Blinker eines Kraftfahrzeuges mit Anhänger, dessen einerseits mit einer Gleichstromwelle und andererseits mit der Fahrzeugmasse verbundener Blinkgeber für die vier Kraftfahrzeugblinker und ggf. zwei Seitenblinker mit einem den Blinkern vorgeordneten Seitenwählschalter verbunden ist, gekennzeichnet durch einen die jeweilige Summenleistung der eingeschalteten Blinker messenden, einerseits mit dem Blinkgeber zu verbindenden und andererseits mit einer Kontrolleuchte verbundenen Leistungsmesser, der bei einem Überschreiten der Leistung zweier Blinker die Kontrolleuchte mit einem Spannungssignal beaufschlagt und bei einem Unterschreiten dieses Leistungsgrenzwertes die Kontrolleuchte nicht mit Spannung versorgt (Figur 2).

FIG.2

FB 1611
1. Juli 1987

MFK-Maschinenfabrik Kraeft GmbH, Goebelstr. 49,
2804 Lilienthal

---

Einrichtung zur Blinker-Funktionskontrolle für
ein Kraftfahrzeug mit Anhänger

---

Die Erfindung betrifft eine Einrichtung zur optischen
Funktionskontrolle der Blinker eines Kraftfahrzeuges
mit Anhänger, dessen einerseits mit einer Gleichstromquelle und andererseits mit der Fahrzeugmasse verbundener
Blinkgeber für die vier Kraftfahrzeug-Blinker und ggf.
zwei Seitenblinker mit einem den Blinkern vorgeordneten
Seiten-Wählschalter verbunden ist.

Kraftfahrzeuge sind bekanntlich an beiden Seiten vorn
und hinten zur Anzeige einer Fahrtrichtungsänderung
jeweils mit einer üblicherweise auch kurz als Blinker bezeichneten Blinkleuchte ausgerüstet. Außerdem sind Kraftfahrzeuge nicht selten zusätzlich auch noch an jeder
Seite etwa mittig mit einem Seitenblinker ausgerüstet.
Bei Betätigung eines im Fahrerbereich angeordneten
Blinkerschalters werden jeweils wahlweise die zwei oder
drei Blinker der linken oder rechten Seite betätigt.
Außerdem können die Blinker zur Verwendung als Warnblinkanzeige mittels eines separaten Schalters insgesamt
eingeschaltet werden.

Die Steuerung der Blinker erfolgt über einen sog. Blinkgeber,
der heutzutage überwiegend elektronisch ausgebildet ist.

Ein Anhänger für ein Kraftfahrzeug ist seinerseits auf
der linken und rechten Seite jeweils im hinteren Bereich
mit einem Blinker ausgerüstet. Um ein Kraftfahrzeug auf
einen Betrieb mit Anhänger umzustellen, muß es entsprechend
umgerüstet werden, wobei der mit drei Kontakten ausgerüstete
Blinkgeber (Spannungsquelle, Masse, Seiten-Wählschalter)
durch einen Blinkgeber mit einem zusätzlichen vierten Kontakt
zu ersetzen ist. Eine solche Umrüstung bereitet häufig
Schwierigkeiten, weil die Blinkgeber unterschiedlicher
Fahrzeugtypen i.d.R. unterschiedlich ausgebildet sind.
Sie bereitet insbesondere dann erhebliche Schwierigkeiten,
wenn der Blinkgeber nicht als gesondertes Bauteil vorhanden,
sondern in die elektrische Anlage - beispielsweise in die
sog. Steckleiste - integriert ist.

Dabei ist noch zu beachten, daß es bei einer Umrüstung eines
Kraftfahrzeuges auf Anhängerbetrieb nicht nur eines Anschlusses der beiden zusätzlichen Blinker des Anhängers
bedarf, sondern daß aufgrund der einschlägigen Vorschriften
im Bereich des Armaturenbrettes des Kraftfahrzeuges eine

- 3 -

zusätzliche Kontrolleuchte angeordnet werden muß, welche
den ordnungsgemäßen Betrieb bzw. den Ausfall eines Blinkers
anzeigt, so daß auch diese einer optischen Blinker-Funktionskontrolle dienenden Kontrolleuchte in geeigneter Weise
angeschlossen werden muß.

Der vorliegenden Erfindung liegt die Aufgabe zugrunde,
eine Einrichtung der eingangs beschriebenen Gattung zu
schaffen, mittels welcher eine entsprechende Umrüstung
(oder auch eine Erstausrüstung) eines Kraftfahrzeuges
auf Anhängerbetrieb in einfachster und auch preiswerter
Weise durchzuführen ist, ohne daß es eines Austausches
des vorhandenen Blinkgebers bedarf.

Die Lösung dieser Aufgabe ist erfindungsgemäß gekennzeichnet
durch einen die jeweilige Summenleistung der eingeschalteten
Blinker messenden, einerseits mit dem vorhandenen Blinkgeber
zu verbindenen und andererseits mit der am Armaturenbrett
des Fahrzeuges zu montierenden Kontrolleuchte verbundenen
Leistungsmesser, der bei einem Überschreiten der Leistung
zweier Blinker (= Leistungsgrenzwert) die Kontrolleuchte
mit einem Spannungssignal beaufschlagt, welches eine optische
Anzeige bewirkt, und bei einem Unterschreiten dieses
Leistungsgrenzwertes die Kontrolleuchte nicht mit Spannung
versorgt, so daß es für den Fahrer erkennbar ist, daß
einer der Blinker ausgefallen ist.

Eine erfindungsgemäße Einrichtung für ein Kraftfahrzeug,
welches außer den üblicherweise jeweils mit gleicher
Leistung arbeitenden vier Blinkern an den beiden Seiten
zusätzlich jeweils einen Seitenblinker aufweist, ist
bevorzugt so ausgerüstet, daß der Leistungsgrenzwert
etwas über der Summenleistung zweier Blinker und eines
Seitenblinkers liegt, wobei die Leistung eines Seitenblinkers i.a. niedriger ist als die eines vorn oder hinten angeordneten Blinkers. Die Leistung eines solchen Blinkers
beträgt nämlich üblicherweise 21 Watt, während die Leistung
eines Seitenblinkers nur 10 Watt beträgt. Bei einer derartigen Ausbildung beträgt der Leistungsgrenzwert bevorzugt 53 Watt (zweimal 21 Watt zzgl. 10 Watt).

Leuchtet mithin bei einer derartigen Einrichtung die
zusätzliche Kontrolleuchte bei Blinkbetrieb auf, so ist
dieses nur möglich, wenn beide Blinker und der Seitenblinker des Kraftfahrzeuges (Summenleistung: 52 Watt) und
zusätzlich der entsprechende linke oder rechte Blinker
des Anhängers in Betrieb sind. Leuchtet dagegen die zusätzliche
Kontrolleuchte bei Blinkerbetrieb nicht auf, so muß wenigstens
einer der drei Blinker des Kraftfahrzeuges nebst Anhänger
einer Seite ausgefallen sein und bedarf einer Reparatur.
Dabei wird ein Ausfall des betreffenden Seitenblinkers
bewußt nicht berücksichtigt, da es sich bei einem Seitenblinker um eine zusätzliche Maßnahme handelt, die gesetzlich
nicht vorgeschrieben ist.

Der Leistungsmesser der erfindungsgemäßen Einrichtung, der
bevorzugt elektronisch ausgebildet ist und demgemäß als
relativ kleine Baueinheit zu fertigen ist, die sich an
praktisch beliebigem Ort und in beliebiger Einbaulage unterbringen läßt, kann dem vorhandenen Blinkgeber entweder vor-
oder nachgeordnet werden, wie dieses anhand von Ausführungsbeispielen nachstehend noch im einzelnen dargelegt ist.

Bevorzugte Ausgestaltungen der vorliegenden Erfindung sind
in den Unteransprüchen beschrieben.

Die Erfindung ist nachstehend unter Bezugnahme auf eine
Zeichnung weiter erläutert. Es zeigt:

Fig. 1   die Blinkanlage eines Kraftfahrzeuges;

Fig. 2   eine erste Anordnung der mit der erfindungsgemäßen Einrichtung versehenen Blinkanlage;
         und

Fig. 3   eine zweite Anordnung der erfindungsgemäßen
         Einrichtung.

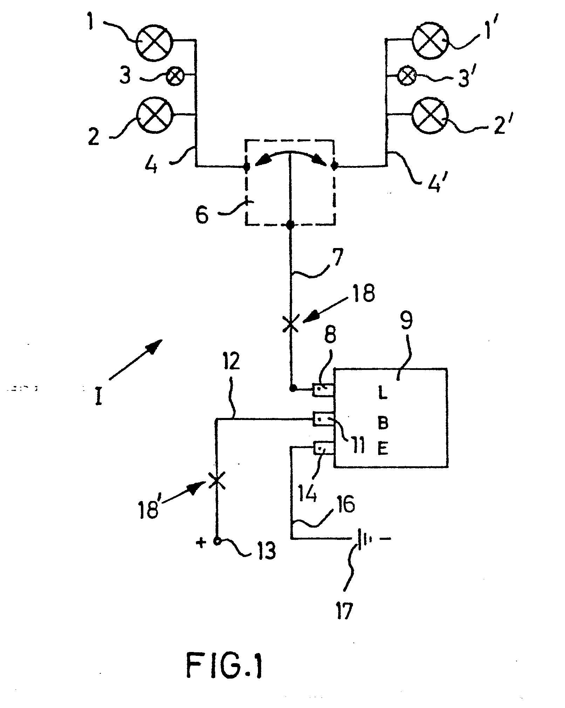

Fig. 1 zeigt die (in den Fig. 2 und 3) insgesamt mit I
bezeichnete Blinkeinrichtung eines nicht für Anhängerbetrieb
ausgerüsteten Kraftfahrzeuges. Die vorderen Blinkleuchten
bzw. Blinker sind mit 1 bzw. 1' bezeichnet und die hinteren
Blinker mit 2 bzw. 2'. Bei der dargestellten Blinkanlage
sind außerdem noch zwei Seitenblinker 3 und 3' vorhanden.

Die linken Blinker 1, 2 und 3 sind jeweils über eine Leitung
4 und die rechten 1', 2' und 3' über eine Leitung 4' mit
einem Seiten-Wählschalter 6 verbunden, der seinerseits über
eine Verbindungsleitung 7 mit einem ersten Kontakt 8 eines
elektronischen Blinkgebers 9 verbunden ist. Ein zweiter
Kontakt 11 des Blinkgebers 9 führt über eine Leitung 12
zu einer Gleichstrom-Spannungsquelle 13, während ein dritter
Kontakt 14 des Blinkgebers 9 über eine Leitung 16 mit der
Fahrzeugmasse 17 verbunden ist.

Um die (vorhandene) Blinkanlage gemäß Fig. 1 durch Einbau
einer erfindungsgemäßen Einrichtung E (s. Fig. 2 und 3)
zur optischen Blinker-Funktionskontrolle umrüsten zu können,
ohne daß es eines Ersatzes des - ggf. völlig in die elektrische
Einrichtung integrierten - Blinkgebers 9 bedarf, kann entweder die Leitung 7 an der mit einem Kreuz gekennzeichneten
Unterbrechungsstelle 18 oder die Leitung 12 an der ebenfalls mit einem Kreuz gekennzeichneten Unterbrechungsstelle 18'
unterbrochen werden, wie dieses nachstehend anhand der
Fig. 2 und 3 erläutert ist.

Fig. 2 zeigt die vorhandene Blinkanlage gemäß Fig. 1
mit zwischen dem Seitenwählschalter 6 und dem Kontakt 8
des Blinkgebers 9 (also an der Unterbrechungsstelle 18)
unterbrochener Leitung 7. Der elektronische Leistungsmesser 19 der Einrichtung E ist über zwei Leitungen 20
und 20' mit einer zusätzlichen Kontrolleuchte 21 verbunden,
die am Armaturenbrett 22 im Sichtbereich des Fahrers des
Kraftfahrzeuges zu befestigen ist. Außerdem ist der Leistungsmesser 19 der Einrichtung E über eine Leitung 23 mit der
Fahrzeugmasse 17 verbunden. Eine weitere Leitung 24 führt
von dem Leistungsmesser 19 zum Kontakt des Blinkgebers 9,
und über eine Leitung 25 ist der Leistungsmesser 19 schließlich
mit der Leitung 7 verbunden, die ihrerseits nicht mehr zum
Kontakt 8 führt, sondern an der Unterbrechungsstelle 18
unterbrochen ist.

Fig. 3 zeigt eine Variante, bei welcher die zwischen dem
Kontakt 8 des Blinkgebers 9 und dem Seitenwählschalter 6
verlaufende Leitung 7 nicht verändert wird und statt dessen
die Leitung 12 an der Unterbrechungsstelle 18' unterbrochen
ist. In diesem Falle führt die bei der Ausbildung gemäß Fig.
2 mit 25 bezeichnete Leitung 25' nicht direkt zum Seitenwählschalter 6 bzw. zu der Leitung 7, sondern zum Kontakt
11 des Blinkgebers 9, während die bei der Anordnung gemäß
Fig. 2 mit 24 bezeichnete Leitung 24' zur Spannungsquelle 13
führt.

Der Leistungsmesser 19 ist so ausgebildet, daß er beim
Überschreiten eines Leistungsgrenzwertes von 53 Watt eine Spannung an die Kontrolleuchte 21 abgibt und diese zum
blinkenden Aufleuchten bringt.

Dieser Leistungsgrenzwert ergibt sich aus dem Umstand, daß
die linken Blinker 1 und 2 des Kraftfahrzeuges sowie der
linke Blinker 26 des Anhängers jeweils eine Leistung von
21 Watt aufweisen und der Seitenblinker 3 eine Leistung
von 10 Watt (die entsprechenden Blinker 1', 2', 3' und 26'
der rechten Seite haben entsprechende Leistungswerte).
Schaltet der Kraftfahrzeugführer beispielsweise die linke
Seite mit dem Seitenwählschalter 6 ein und sind sämtliche
Blinker 1, 2, 3 und 26 in Betrieb, so mißt mithin der
Leistungsmesser 19 eine Summenleistung von 73 Watt und
gibt ein Spannungssignal auf die Kontrolleuchte 21, welche
demgemäß blinkend aufleuchtet und dem Fahrer anzeigt, daß
der linke Zweig der Blinkanlage ordnungsgemäß arbeitet.
Fällt der gesetzlich nicht vorgeschriebene Seitenblinker 3
aus, so mißt der Leistungsmesser 19 eine Summenleistung
von 63 Watt, die noch größer ist als der Leistungsgrenzwert
von 53 Watt, so daß die zusätzliche Kontrolleuchte 21 ebenfalls aufleuchtet. Fällt dagegen einer der Blinker 1 bzw.
2 bzw. 26 aus, und sind die übrigen Blinker dieses Zweiges
in Betrieb, so mißt der Leistungsmesser 19 lediglich eine
Summenleistung von 52 Watt, die unterhalb des Leistungsgrenzwertes liegt, so daß die Kontrolleuchte 21 nicht aufleuchtet und dem Fahrer anzeigt, daß einer der Blinker 1,
2 oder 26 ausgefallen ist. Entsprechendes gilt für die rechte
Seite.

Es ist erkennbar, daß mit der erfindungsgemäßen Einrichtung
eine extrem einfache und wirksame Möglichkeit für eine
Blinker-Funktionskontrolle geschaffen worden ist, die es
ermöglicht, die vorhandene Blinkeinrichtung zu belassen, insbesondere den Blinkgeber 9 nicht austauschen zu müssen, wobei die Montage der Einrichtung E nicht nur äußerst einfach, sondern auch problemlos ist, da der ohnehin äußerst kleinbauende Leistungsmesser 19 an beliebiger Stelle und in beliebiger Einbaulage montiert werden kann und es lediglich erforderlich ist, entweder die Leitung 7 an der Unterbrechungsstelle 18 oder die Leitung 12 an der Unterbrechungsstelle 18' zu unterbrechen und die Leitungen 24, 25 bzw. 24', 25' in der dargestellten Weise an die vorhandene Blinkanlage anzuschließen. Dabei eignet sich die erfindungsgemäße Einrichtung E ersichtlich insbesondere für eine Umrüstung eines Kraftfahrzeuges auf Anhängerbetrieb ist jedoch ersichtlich auch ggf. für eine Erstausrüstung einsetbar und trotz ihrer erheblichen Vorteile außerordentl preiswert herstellbar.

0251319

## BEZUGSZEICHENLISTE
## (LIST OF REFERENCE NUMERALS)

| | | |
|---|---|---|
| 1, 1' | vordere Blinker (Kfz) | 1 |
| 2, 2' | hintere Blinker (Kfz) | 2 |
| 3, 3' | Seitenblinker (Kfz) | 3 |
| 4, 4' | Leitung | 4 |
| 5 | – | 5 |
| 6 | Seitenwählschalter | 6 |
| 7 | Leitung | 7 |
| 8 | Kontakt (erster –) (von 9) | 8 |
| 9 | Blinkgeber | 9 |
| 10 | – | 10 |
| 11 | Kontakt (zweiter –) | 11 |
| 12 | Leitung | 12 |
| 13 | Gleichstrom-Spannungsquelle | 13 |
| 14 | Kontakt (dritter –) | 14 |
| 15 | – | 15 |
| 16 | Leitung | 16 |
| 17 | Fahrzeugmasse | 17 |
| 18, 18' | Unterbrechungsstellen | 18 |
| 19 | Leistungsmesser | 19 |
| 20, 20' | Leitungen | 20 |
| 21 | Kontrolleuchte | 21 |
| 22 | Armaturenbrett | 22 |
| 23 | Leitung | 23 |
| 24, 24' | Leitung | 24 |
| 25, 25' | Leitung | 25 |
| 26, 26' | Blinker (Anhänger) | 26 |
| 27 | | 27 |
| 28 | | 28 |
| 29 | | 29 |
| 30 | | 30 |

A n s p r ü c h e
===================

1. Einrichtung zur optischen Funktionskontrolle der
Blinker eines Kraftfahrzeuges mit Anhänger, dessen
einerseits mit einer Gleichstromquelle und andererseits
mit der Fahrzeugmasse verbundener Blinkgeber für die
vier Kraftfahrzeugblinker und ggf. zwei Seitenblinker
mit einem den Blinkern vorgeordneten Seitenwählschalter
verbunden ist, gekennzeichnet durch einen die jeweilige
Summenleistung der eingeschalteten Blinker (1, 2, 3, 26
bzw. 1', 2', 3', 26') messenden, einerseits mit dem
Blinkgeber (9) zu verbindenden und andererseits mit einer
Kontrolleuchte (21) verbundenen Leistungsmesser (19),
der bei einem Überschreiten der Leistung zweier Blinker
(z.B. 1, 2; 1, 26; 2, 26) die Kontrolleuchte (21) mit
einem Spannungssignal beaufschlagt und bei einem Unterschreiten dieses Leistungsgrenzwertes die Kontrolleuchte
(21) nicht mit Spannung versorgt.

2. Einrichtung nach Anspruch 1, gekennzeichnet durch einen
elektron...schen Leistungsmesser (19).

3. Einrichtung nach Anspruch 1 oder 2 für ein Kraftfahrzeug,
welches außer vier Blinkern gleicher Leistung an den
beiden Seiten zusätzlich jeweils einen Seitenblinker geringerer
Leistung aufweist, dadurch gekennzeichnet, daß der Leistungsgrenzwert etwas über der Summenleistung zweier Blinker
(z.B. 1, 2; 1, 26; 2, 26) liegt.

529

4. Einrichtung nach Anspruch 3 für ein Kraftfahrzeug, dessen vier Blinker ebenso wie die beiden Blinker des Anhängers jeweils eine Leistung von 21 Watt aufweisen, und dessen Seitenblinker eine Leistung von 10 Watt aufweisen, dadurch gekennzeichnet, daß der Leistungsgrenzwert wenigstens 53 Watt beträgt.

5. Einrichtung nach einem oder mehreren der vorhergehenden Ansprüche, dadurch gekennzeichnet, daß der Leistungsmesser (19) bei unterbrochener Leitung (7) zwischen dem Seitenwählschalter (6) und dem Blinkgeber (9) mit dem Seitenwählschalter (6) zu verbinden ist und außerdem mit dem nicht zur Spannungsquelle (13) bzw. zur Fahrzeugmasse (17) führenden Kontakt (8) des Blinkgebers (9) zu verbinden ist oder bei unterbrochener Leitung (12) zwischen dem Blinkgeber (9) und der Spannungsquelle (13) mit einer Leitung (24') mit der Spannungsquelle (13) und einer Leitung (25') mit dem nicht zum Seitenwählschalter (6) bzw. zur Fahrzeugmasse (17) führenden Kontakt (11) des Blinkgebers (9) verbunden ist.

FIG.1

FIG.2

FIG.3